# EUROPEAN PATENT APPLICATION

(11) **EP 4 488 245 A1**
(43) Date of publication of application: **08.01.2025**
(21) Application number: 23183699.0
(22) Date of filing: 05.07.2023
(51) Int. Cl.: C04B 35/634

(54) **USE OF MODIFIED POLYVINYL ACETALS AS BINDER IN CERAMIC GREEN SHEETS**

(71) Applicant: Kuraray Europe GmbH, 65795 Hattersheim (DE)
(72) Inventor: Mummy, Florian, 60325 Frankfurt am Main (DE); Becker, Greta, 55122 Mainz (DE)
(74) Representative: Janßen, Christian Oliver

(57) **Abstract**

*Use of an acid-modified polyvinyl acetal as a binder for the production of a ceramic green sheet or a ceramic moulded body wherein the acid-modified polyvinyl acetal comprises carboxyl units in the range from 0.5 to 1.5 mol% and*

## Description

The invention is directed to the use of modified polyvinyl acetals as binder in ceramic green sheets.

Ceramic materials like ceramic capacitators for the electronics industry are generally produced by sintering of a so-called green sheet, i.e. a film-like, thin moulded body, which contains the ceramic materials. For the production of these green sheets, a suspension of metal oxides, plasticizers, dispersing agents and binders in organic solvents is produced. This suspension is subsequently applied by means of a suitable process (i.e. doctor blade process) in the desired thickness onto a carrier film and the solvent is removed. The green sheet thus obtained must be free from cracks, exhibit a smooth surface and still have a certain elasticity.

Polyvinyl acetals such as polyvinyl butyral are frequently used as binders for the production of ceramic green sheets. To this end, DE 4 003 198 A1 describes the production of a casting slip for ceramic green films in which polyvinyl butyral with a residual polyvinyl acetate content of 0 to 2% by weight is used as binder.

In recent years, multi-layer ceramic capacitors (MLCC) are becoming increasingly important for the electronic industry. MLCCs consist of a number of individual capacitors stacked together in parallel and contacted via the terminal surfaces. Due to the advancing miniaturization of the electronic components, the size of the powder particles can be as small as 10 nm. Hence, the production demands an increased accuracy of the ceramic sheets used therein. Additionally, the multi-layer stacks of ceramic green sheets are often wound up to a roll in the production process. To avoid delamination, the individual green sheets must possess superior properties with respect to binding and elongation-at-break. To this end, there is a need in the industry for further improved binders to be used in the suspensions.

Accordingly, one objective of the invention was to provide binders for ceramic green sheets leading to improved adhesion, improved dispersion effect, an improved environmental and safety impact and/or with a better economical profile in the production and use of the ceramic green sheet, and especially with improved elongation-at-break.

Surprisingly, the current inventors have now found that the use of polyvinyl acetals modified with a low concentration of carboxylic acid groups in the polymer chain leads to superior performance in the production of ceramic green sheets.

Accordingly, the present invention concerns the use of an acid-modified polyvinyl acetal as a binder for the production of a ceramic green sheet or a ceramic moulded body wherein the acid-modified polyvinyl acetal comprises carboxyl units in the range from 0.5 to 1.5 mol%.

The term "comprises carboxyl units" is intended to denote that the polyvinyl acetal bears carboxyl acid and/or carboxylate units somewhere in the polymer chain.

The acid-modified polyvinyl acetal of the present invention can be obtained by subjecting an aldehyde to an acetalization reaction with an acid-modified polyvinyl alcohol. Such acid-modified polyvinyl alcohols are known in the art and can be obtained commercially or prepared in a copolymerizing reaction in the presence of unsaturated carboxylic acids.

Useful unsaturated carboxylic acids in this respect include for example maleic acid, itaconic acid, acrylic acid and methacrylic acid. The acid-modified polyvinyl alcohols can be produced by copolymerizing the carboxylic acid and/or a suitable ester thereof with a vinyl ester monomer and saponifying the obtained acid-modified polyvinyl ester copolymer.

Preferably, the acid-modified polyvinyl acetal comprises carboxyl units in the range from 0.6 to 1.4 mol%, from 0.7 to 1.3 mol% and most preferably from 0.8 to 1.2 mol%.

Preferably, the degree of polymerization of the acid-modified polyvinyl acetal is from 1000 to 2500, more preferably from 1500 to 2000, most preferably from 1700 to 1800.

Although there is no particular limitation on the degree of saponification of the acetate groups, it is preferably 85 mol% or more, more preferably 95 mol% or more, still more preferably 98 mol% or more, and most preferably 99 mol% or more. Preferably, the acid-modified polyvinyl acetal has a polyvinyl acetate content of from 1.0 to 15 % by weight, more preferably 1.5 to 2.5 % by weight or 10 to 15 % by weight, or 12 to 13 % by weight.

Preferably, the degree of acetalization is 5 mol% or more and less than 40 mol%, more preferably the lower limit of the degree of acetalization is more than 6 mol%, more than 7 mol%, more than 8 mol%, more than 9 mol%, and most preferably more than 10 mol%. Further, the upper limit of the degree of acetalization is more preferably 38 mol% or less, 36 mol% or less, 34 mol% or less, and 32 mol% or less in this order, and most preferably less than 30 mol%.

Preferably, the acid-modified polyvinyl acetal has a polyvinyl alcohol content of from 15 to 25 % by weight, more preferably 17 to 23 % by weight, most preferably 18 to 22 % by weight.

The vinyl alcohol content and vinyl acetate content were determined in accordance with DIN ISO 3681 (Acetate content) and DIN ISO 53240 (PVA content). The vinyl acetal content is calculated as the remaining portion from the sum of vinyl alcohol content and vinyl acetate content determined in accordance with DIN ISO 53401/53240.

Preferably, the acetal groups individually have 1 to 7 carbon atoms, i.e. they derive from the condensation reaction with aldehydes with 1 to 7 carbon atoms. More preferably, they derive from the list consisting of methanal (formaldehyde), acetaldehyde, n-propanal (propionaldehyde), n-butanal (butyraldehyde), iso-butanal (2-methyl-1-propanal, iso-butyraldehyde), n-pentanal (valeraldeyhde), iso-pentanal (3-methyl-1-butanal), sec-pentanal (2-methyl-1-butanal), tert-pentanal (2,2,dimethyl-1-propanal), n-hexanal (capronaldehyde), iso-hexanal (2-methyl-1-pentanal, 3-methyl-1-pentanal, 4-methyl-1-pentanal), 2,2-dimethyl-1-butanal, 2,3-dimethyl-1-butanal, 3,3-dimethyl-1-butanal, 2-ethyl-1-butanal, n-heptanal, 2-methyl-1-hexanal, 3-methyl-1-hexanal, 4-methyl-1-hexanal, 5-methyl-1-hexanal, 2,2-dimethyl-1-pentanal, 3,3-dimethyl-1-pentanal, 4,4-dimethyl-1-pentanal, 2,3-dimethyl-1-pentanal, 2,4-dimethyl-1-pentanal, 3,4-dimethyl-1-pentanal, 2-ethyl-1-pentanal, 2-ethyl-2-methyl-1-butanal, 2-ethyl-3-methyl-1-butanal, 3-ethyl-2-methyl-1-butanal, cyclohexylaldehyde and benzaldehyde. Most preferably, they derive from the condensation reaction with iso-butyraldehyde, acetaldehyde and/or n-butyraldehyde. Specifically, the acid-modified polyvinyl acetal is an acid-modified polyvinyl butyral.

Also preferably, the acid-modified polyvinyl acetals according to the present invention are mixed acetals, i.e. they comprise at least two different acetal groups. The most preferable combination is a mixture of acetals derived from acetaldehyde and n-butyraldehyde.

In a second aspect, the present invention concerns a suspension composition comprising one or more inorganic pigments, one or more organic solvents, one or more binders, one or more plasticizers, and one or more dispersing agents, wherein binder is an acid-modified polyvinyl acetal comprising carboxyl units in the range from 0.5 to 1.5 mol%.

Preferably, the acetal group has 2 to 7 carbon atoms and is derived from the same aldehyde(s) as described above. Most preferably, the ethylene vinyl acetal comprises n-butylaldehyde and/or acetaldehyde acetal groups.

The inorganic pigments can be chosen from finely ground granules of paraelectric or ferroelectric raw materials and include titanium dioxide (rutile), preferably modified by additives of zinc, zirconium, niobium, magnesium, tantalum, cobalt and/or strontium, as well as compounds chosen from MgNb₂O₆, ZnNb₂O₆, MgTa₂O₆, ZnTa₂O₆, (ZnMg)TiO₃, (ZrSn)TiO₄ and Ba₂Ti₉O₂₀. The average particle diameter of the inorganic pigments is preferably about 0.01 to 1 µm.

The organic solvent may be chosen from aromatic compounds, such as toluene and xylene, and alcohol compounds, such as ethyl alcohol, isopropyl alcohol and butyl alcohol and more preferably, mixtures thereof.

Suitable dispersing agents include fish oil, phosphoric acid esters and functional polymers comprising polyoxyalkylene groups on side chain, such as the MALIALIM^{™} series commercially available from NOF America Cooperation.

In addition to the binder according to the present invention, the suspension may comprise other components chosen inter alia from other binders like cellulose resins, acrylic resins, vinyl acetate resins, polyvinyl alcohol resins; plasticizers such as polyethylene glycol or phthalic esters, and/or a defoamer.

The method to produce the suspension composition is not specifically limited. Various dispersing methods may be used, for example, a method of using a media-type mill, such as a bead mill, a ball mill, an attritor, a paint shaker and a sand mill; a method of kneading a powdered ceramic, a dispersing medium, a dispersing agent, a binder, a plasticizer and the like; and a method of using a three-roll mill. Using a three-roll mill, the method includes dispersing a powdered inorganic pigment in an organic solvent (mixture) together with a dispersing agent, a binder, a plasticizer, and the like. The mixture is passed through a small gap between a first roller and a second roller, which roll independently from each other and are adjacent to each other with the small gap therebetween, so as to be compressed and kneaded, and subsequently, the mixture is passed between the second roller and a third roller, which rolls and is adjacent to the second roller with a smaller gap therebetween than the gap between the first and the second rollers, so as to be further compressed and kneaded.

Preferably, the powdered ceramic, dispersing agent, and solvent (mixture) are premixed and dispersed so that the dispersing agent is adsorbed on the powdered ceramic. In a second step, the binder is to the mixture thus formed, and subsequently, mixing and dispersing is performed again.

The thickness of the coating film produced by these processes can be 0.25 to 25 µm, and typically, 1 to 10 µm.

### Examples

### Synthesis of acid-modified polyvinyl butyral - Example 1

100 parts by weight of polyvinyl alcohol KURARAY POVAL^{®} 32-97 KL with a viscosity of 32 mPas (4 w/w% in aqueous solution measured according to DIN 53015 at 20 °C) and 1 mol% carboxyl function, a degree of hydrolysis of 98 mol% and a degree of polymerization of 1750 was dissolved in 1333 parts by weight of water and heated up to 90 °C. After the polyvinyl alcohol powder was fully dissolved, the temperature was constantly decreased and at a temperature of 40 °C, 52.5 parts by weight of n-butyraldehyde was added, and at a temperature of 10 °C while stirring, 150 parts by weight of 20% hydrochloric acid was added. The mixture was heated to 40 °C. After stirring at this temperature for 2 hours, the precipitate formed was separated after cooling to room temperature, washed to neutrality with water, and dried. An acid-modified polyvinyl butyral having a polyvinyl alcohol content of 20.5% by weight (29.5 mol %) and a polyvinyl acetate content of 2.6% by weight (1.9 mol %) was obtained.

### Comparative Example 1 - non-modified polyvinyl butyral

Mowital^{®} polyvinyl butyral resin B 75 H obtained from Kuraray Europe GmbH, which contains acetal units prepared from n-butyraldehyde and a polyvinyl alcohol with no acid functionalities in/on the polymer chain, is used to prepare a PVB solution. The PVB solution is used a binder solution to prepare a ceramic green sheet.

### Preparation of inorganic dispersion

1.3 g of a polyoxyalkylene dispersing agent (MALIALIM^{™} series, name: SC-0505K, supplier: NOF) was added to a mixed solvent of 25 g of toluene and 25 g of ethanol and dissolved by stirring. Next, 130 g of barium titanate powder (manufactured by Fuji Titanium Industry, UQBT-20) and 500 g of ZrO₂ beads (diameter: 2 mm) were added to the obtained solution. The organic dispersion was mixed for 6-8 hours on a roller mixer.

### Preparation of resin solution

A resin solution was prepared by adding 10.4 g of the (polyvinyl) acetal resin and 3.95 g of the plasticizer 3G8 to a mixed solvent of 59.8 g of ethanol and 59.8 g of toluene. The mixture is stirred to dissolve the resin.

### Ceramic green sheet production

The resin solution was added to the obtained inorganic dispersion and mixed using a roller block mixer for 10 h to obtain a composition for a ceramic green sheet. The ZrO₂-beads were separated from the dispersion using a nylon screen/filter.

The obtained dispersion was degassed and casted according to the doctor blade process using an automized film application machine. A siliconized PET (Hostaphan^{®} RN 2 SLK, thickness 75 µm) was used as casting support. After casting, the film was dried overnight. To remove residual solvent, the films were dried in an oven for 1 hours at 50°C and subsequently drawn off.

The films obtained had a thickness of 19 µm and exhibited to cracks, blisters or defects during optical assessment.

From the green sheets concerned, suitable tensile specimens according to DIN EN ISO 527-3, Type 2 (150 mm x 20 mm) in the form of a so-called "stripe" were punched out. 8 tensile specimens per type of film were punched out cross to the direction of casting and inspected by human eye. The 5 specimen which appeared to have the least flaws from the punching process were selected for measurement for both Example 1 and Comparable Example 1.

The samples were conditioned before measurement at a temperature of 23 °C and a relative humidity of 50% for 24 hours.

A universal tensile test machine (ZwickiLine Z0,5 TN from Zwick/Roell) was used for tensile force measurement. The measurements were carried under controlled conditions, being 23 °C and 50% relative humidity in accordance with DIN EN ISO 527-1 and DIN EN ISO 527-3.

| **Sample** | **Elongation at Break [%]** |
|---|---|
| **Acid-modified polyvinyl butyral - Example 1** | |
| Sample 1 | 21,0 |
| Sample 2 | 26,4 |
| Sample 3 | 20,5 |
| Sample 4 | 22,2 |
| Sample 5 | 20,7 |
| **Average value** | **22,2** |
| | |

| **PVB (Mowital^{®} B 75 H) - Comparable Example 1** | |
|---|---|
| Sample 1 | 6,3 |
| Sample 2 | 4,7 |
| Sample 3 | 6,5 |
| Sample 4 | 5,6 |
| Sample 5 | 4,5 |
| **Average value** | **5,5 %** |

| | |
|---|---|
| Table 1: Results of the tensile test | |

The results of the tensile test show that the ceramic green sheets obtained with the acid modified poly vinyl acetal have a value for the elongation at break of more than three times of that obtained with the PVB standard.

## Claims

1. Use of an acid-modified polyvinyl acetal as a binder for the production of a ceramic green sheet or a ceramic moulded body wherein the acid-modified polyvinyl acetal comprises carboxyl units in the range from 0.5 to 1.5 mol%.

2. The use according to claim 1 wherein the acid-modified polyvinyl acetal comprises carboxyl units in the range of 0.8 to 1.2 mol%.

3. The use according to claim 1 or 2 wherein the carboxyl units are derived from a dicarboxylic acid.

4. The use according to any one of the claims above wherein the acid-modified polyvinyl acetal is obtained by acetalization of a polyvinyl alcohol produced in a copolymerization step using maleic acid or itaconic acid.

5. The use according to any one of the claims above wherein the degree of polymerization of the acid-modified polyvinyl acetal is from 1000 to 2500.

6. The use according to claim 5 wherein the degree of polymerization of the acid-modified polyvinyl acetal is from 1500 to 2000.

7. The use according to any one of the claims above wherein the acid-modified polyvinyl acetal has a polyvinyl alcohol content of from 15 to 25 % by weight.

8. The use according to any one of the claims above wherein the acid-modified polyvinyl acetal has a polyvinyl acetate content of from 1.0 to 15 % by weight.

9. The use according to any one of the claims above wherein the acid-modified polyvinyl acetal is an acid-modified polyvinyl butyral.

10. A suspension composition comprising one or more inorganic pigments, one or more organic solvents, one or more binders, one or more plasticizers, and one or more dispersing agents, wherein the binder is an acid-modified polyvinyl acetal comprising carboxyl units in the range from 0.5 to 1.5 mol%.

11. The suspension according to claim 10 wherein the wherein the acid-modified polyvinyl acetal is obtained by acetalization of a polyvinyl alcohol produced in a copolymerization step using maleic acid or itaconic acid.

12. The suspension according to claim 10 or 11 wherein the degree of polymerization of the acid-modified polyvinyl acetal is from 1500 to 2000.

13. The suspension according to any one of claims 10 to 12 wherein the acid-modified polyvinyl acetal has a polyvinyl alcohol content of from 15 to 25 % by weight.

14. A process for the production of a ceramic green sheet or a ceramic moulded body using the suspension according to any one of claims 10 to 13.
